# EUROPÄISCHE PATENTSCHRIFT

(11) **EP 3 308 416 B1**
(45) Veröffentlichungstag und Bekanntmachung des Hinweises auf die Patenterteilung: **12.04.2023**
(21) Anmeldenummer: 16726279.9
(22) Anmeldetag: 20.05.2016
(51) Int. Cl.: H01M 50/124, H01M 50/308, H01M 50/325, H01M 50/636, H01M 50/691, H01M 50/105, H01M 50/119, H01M 50/121, H01M 50/129, H01M 50/609, H01M 10/04, H01M 10/058, H01M 10/052

(54) **"VERFAHREN ZUR HERSTELLUNG VON ELEKTROLYT-POUCHZELLEN FÜR ELEKTROBATTERIEANORDNUNGEN, ENTSPRECHENDE VORRICHTUNG, SOWIE ELEKTROLYT-POUCHZELLE"**
METHOD FOR PRODUCING ELECTROLYTE POUCH CELLS FOR BATTERY ARRANGEMENTS, CORRESPONDING DEVICE AND POUCH CELL
PROCÉDÉ DE FABRICATION DE CELLULES DE POCHE POUR ARRANGEMENTS DE BATTERIES, DISPOSITIF CORRESPONDANT ET CELLULE DE POCHE

(30) Priorität: 09.06.2015 DE 102015007196
(43) Veröffentlichungstag der Anmeldung: 18.04.2018
(73) Patentinhaber: Industrie-Partner GmbH Radebeul-Coswig, 01640 Coswig (DE)
(72) Erfinder: LOCKE, Christin, 01277 Dresden (DE); HAHNEWALD, Falko, 02633 Doberschau-Gaußig (DE); HANDRICK, Georg, 02994 Bernsdorf (DE); HOCK, Ralf, Josef, 09112 Chemnitz (DE)
(74) Vertreter: Lelgemann, Karl-Heinz
(86) Internationale Anmeldenummer: PCT/EP2016/000841
(87) Internationale Veröffentlichungsnummer: WO 2016/198145

(56) Entgegenhaltungen:
- EP-A1- 2 393 146
- EP-A1- 2 696 428
- KR-A- 20140 067 246
- US-A1- 2008 070 101
- US-A1- 2014 023 912

## Beschreibung

Die Erfindung bezieht sich auf ein Verfahren zur Herstellung von Elektrolyt-Pouchzellen für Elektrobatterieanordnungen nach dem Oberbegriff des Patentanspruchs 1, auf eine entsprechend hergestellte Elektrolyt-Pouchzelle sowie auf eine Vorrichtung zur Herstellung von Elektrolyt-Pouchzellen nach dem Oberbegriff des Patentanspruchs 19.

Elektrolyt-Pouchzellen werden in großer Anzahl zu Elektrobatterieanordnungen zusammengefügt. Aus dem Stand der Technik bekannte derartige Elektrolyt-Pouchzellen werden produziert und dann als entsprechend fertiggestellte Einheiten vor ihrer Zusammenfügung zu einer Elektrobatterieanordnung, die an einem anderen Ort stattfinden kann, transportiert.

Die KR 2014 0067246 A zeigt eine Li-Ionen Pouchzelle, deren Gehäuse aus einer Folie besteht, bei der ein Durchlass, der der Elektrolyt-Ausfüllung und/oder Evakuierung der Pouchzelle dient, zwischen zwei Flächenabschnitten im Bereich der Siegelnaht verschweißt ist. Der Durchlass ist vorzugsweise aus dem gleichen thermoplastischen Polymer wie das das die Siegelnaht bildet (Polypropylen), und kann nach der Befüllung der Pouchzelle verformt und geschlossen werden.

Die EP 2 393 146 A1 offenbart eine Li-Ionen Pouchzelle, deren Gehäuse aus zwei Flächenabschnitten einer Folie besteht, die im Bereich der Siegelnaht einen Durchlass aufweist. Der Durchlass dient der Befüllung mit Elektrolyt und/oder Evakuierung der Pouchzelle.

Die US 2008/070101 A1 offenbart eine Li-Ionen Pouchzelle, deren Gehäuse aus zwei verschweißten Folien besteht, die zwischen den Folienabschnitten, im Bereich der Siegelnaht, einen blinden Durchlass mit Septum aus Polypropylen aufweist. Der Durchlass dient der Befüllung mit Elektrolyt und/oder Evakuierung der Pouchzelle, hat einen rautenförmigen Querschnitt. Der Durchlass ist als verlorener Port ausgebildet, ist schmelzbar und kann dadurch geschlossen werden. Die Pouchfolie ist dreischichtig und besteht aus Polypropylen, Aluminiumfolie und Polyester.

Ausgehend von dem vorstehend geschilderten Stand der Technik liegt der Erfindung die Aufgabe zugrunde, ein Verfahren zur Herstellung von Elektrolyt-Pouchzellen für Elektrobatterieanordnungen der eingangs geschilderten Art zur Verfügung zu stellen, mittels dem es möglich ist, Elektrolyt-Pouchzellen herzustellen, die mit einem im Vergleich zum Stand der Technik erheblich verringerten technisch-konstruktiven Aufwand unter Vakuumzustand befüllbar sind, die zwischenzeitlich verschließbar sind, denen Formiergas entnehmbar ist und die endgültig verschließbar sind. Des Weiteren soll der Anfall kontaminierter Abfälle bei der Durchführung des Verfahrens minimiert werden.

Diese Aufgabe wird erfindungsgemäß dadurch gelöst, dass bei dem vorstehend geschilderten Verfahren als Durchlässe verlorene Ports vorgesehen sind und in eine Blindbohrung jedes Ports ein Haltedorn eingesteckt wird, mittels dem der Port positioniert und seine Blindbohrung während des Verschweißens offengehalten wird. Die Positionierung der Elektrolyt-Pouchzelle mittels des bzw. der Ports geschieht im Zusammenwirken mit einem entsprechend gestalteten, später noch beschriebenen Rahmen, mittels dem eine genaue Ausrichtung der einzelnen Bestandteile der Elektrolyt-Pouchzelle ermöglicht ist.

Der zwischen den beiden Flächenabschnitten der Folie eingeschweißte Durchlass ermöglicht es, ohne Kontaminierung des Innenraums der Elektrolyt-Pouchzelle diesen Innenraum zu vakuumieren, den Innenraum der Elektrolyt-Pouchzelle mit dem vorgesehenen Elektrolyt zu befüllen, den Innenraum der Elektrolyt-Pouchzelle zwischenzeitlich zu verschließen, nach Ablauf eines Zeitraums nach dem zwischenzeitlichen Verschluss dem Innenraum der Elektrolyt-Pouchzelle Formiergas zu entnehmen und danach den Innenraum der Elektrolyt-Pouchzelle endgültig zu verschließen. Darüber hinaus wird beim erfindungsgemäßen Verfahren der Anfall kontaminierter Abfälle weitgehend reduziert.

Wenn bei dem erfindungsgemäßen Verfahren als Folie eine auf ihrer Innenseite aus Polypropylen bestehende Verbundfolie und als Durchlass ein Polypropylendurchlass verwendet werden, kann aufgrund der Materialgleichheit zwischen dem Durchlass und der mit diesem zu verschweißenden Bereiche der Folie eine feste Haftung zwischen dem Durchlass und der Folie dauerhaft sichergestellt werden.

Die beiden miteinander zu verschweißenden Flächenabschnitte können als zwei voneinander getrennte Folienabschnitte vorgesehen sein, von denen zunächst der eine platziert wird und nach Aufbau der Elektrolyt-Pouchzelle dann der zweite aufgelegt wird. Alternativ besteht die Möglichkeit, einen Folienabschnitt vorzusehen, dessen Länge der doppelten Länge eines Flächenabschnitts entspricht, und diesen nach Auflegen und Ausrichten des Zellstapels auf dem ersten Flächenabschnitt zu falten.

Zweckmäßigerweise sollten die beiden Flächenabschnitte der Folie vor dem Verschweißen bündig zueinander angeordnet werden.

Um eine hinsichtlich nachfolgender Verfahrensschritte flexibel und je nach Anforderungsprofil vielfältig einsetzbare Elektrolyt-Pouchzelle zu schaffen, ist es vorteilhaft, wenn bei dem Verfahren eine Mehrzahl, vorzugsweise vier, Durchlässe platziert und eingesiegelt werden. Hierdurch ist es beispielsweise möglich, für eine Vakuumierung, Befüllung und abschließende Entgasung unterschiedliche Durchlässe vorzusehen.

Bei einer weiteren Ausführungsform des erfindungsgemäßen Verfahrens wird jeder Haltedorn aus dem ihm zugeordneten Port entfernt, wonach eine Dosiernadel in die Blindbohrung des Ports eingeführt wird und die Dosiernadel durch den Port zum Innenraum der Elektrolyt-Pouchzelle durchgestochen wird. Hierdurch wird der Innenraum der Elektrolyt-Pouchzelle zugänglich gemacht.

Um den vorstehend geschilderten Vorgang zu vereinfachen, kann es bei bestimmten vorgegebenen Anforderungsprofilen zweckmäßig sein, vor Einführung der Dosiernadel in die Blindbohrung des Ports diese Blindbohrung etwa mittig durch eine weitere Blindbohrung zu vertiefen, wobei zwischen dem Grund der weiteren Blindbohrung und dem Innenraum der Elektrolyt-Pouchzelle im Port eine Barriere, z.B. mit einer Dicke ≤ 1,5 mm, belassen wird. Die weitere Blindbohrung kann hinsichtlich ihrer Abmessungen wie Tiefe und Durchmesser an die im weiteren Verfahren zur Herstellung der Elektrolyt-Pouchzelle zum Einsatz kommende Dosiernadel angepasst werden.

Eine kontaminationsfreie Befüllung der Elektrolyt-Pouchzelle mit Elektrolyt ist realisierbar, wenn der Innenraum der Elektrolyt-Pouchzelle durch die Dosiernadel hindurch mit Elektrolyt befüllt wird, die Dosiernadel nach Beendigung der Befüllung aus dem Port herausgezogen wird, und der Port beim Herausziehen der Dosiernadel aufgeschmolzen wird. Hierdurch kann sichergestellt werden, dass der für die Befüllung des Innenraums der Elektrolyt-Pouchzelle mit Elektrolyt verwendete Port geschlossen und damit dicht ist, bevor die Dosiernadel in ihrer Gesamtheit aus dem Port herausgezogen ist.

Gemäß einer weiteren vorteilhaften Ausführungsform des erfindungsgemäßen Verfahrens kann der mit Elektrolyt befüllte Innenraum der Elektrolyt-Pouchzelle durch einen für die Befüllung nicht verwendeten Port entgast werden, wobei der entsprechende Port nach der Entgasung beim Herausziehen einer Entgasungsnadel aufgeschmolzen wird. Hierdurch kann unter zuverlässiger Vermeidung irgendwelcher Kontaminierungen die Entnahme von Formiergas aus der Elektrolyt-Pouchzelle nach deren Befüllung mit Elektrolyt sichergestellt werden.

Alternativ zu den vorstehend geschilderten verlorenen Ports können als Durchlässe Kanülen mit Verschluss und integriertem Septum bei der Verwirklichung des erfindungsgemäßen Verfahrens vorgesehen werden, wobei dann ein Überstandabschnitt der Flächenabschnitte der Folie vorgesehen wird, die zumindest eine Kanüle im Bereich des Überstandabschnitts positioniert wird, und die Siegelnaht im Bereich des Überstandabschnitts so erstellt wird, dass sie die zumindest eine Kanüle einsiegelt. Hierdurch wird eine Elektrolyt-Pouchzelle geschaffen, die mittels des Überstandabschnitts bzw. mittels der in dem Überstandabschnitt vorgesehenen Kanülen entsprechend flexibel einsetzbar ist, wie die vorstehend geschilderte Elektrolyt-Pouchzelle mit den verlorenen Ports.

In einfacher Weise lässt sich die entsprechend mit Kanülen versehene Elektrolyt-Pouchzelle weiter verarbeiten, wenn das Septum des Verschlusses der Kanüle mittels einer Dosiernadel durchstochen und der Innenraum der Elektrolyt-Pouchzelle durch die Dosiernadel hindurch mit Elektrolyt befüllt wird.

Zur Entgasung der mit Elektrolyt befüllten Elektrolyt-Pouchzelle kann das Septum des Verschlusses einer weiteren Kanüle mittels einer Entgasungsnadel durchstochen und der Innenraum der Elektrolyt-Pouchzelle entgast bzw. von Formiergas befreit werden.

Zur Weiterverarbeitung der entsprechend mit Elektrolyt befüllten und entgasten Elektrolyt-Pouchzelle ist es vorteilhaft, wenn der Innenraum der Elektrolyt-Pouchzelle mittels einer weiteren Siegelnaht, die am Übergang zum Überstandabschnitt der Flächenabschnitte geschweißt wird, geschlossen wird, und der Überstandabschnitt mit der zumindest einen dort mittels Abschnitten der ersten Siegelnaht fixierten Kanüle von der Elektrolyt-Pouchzelle abgetrennt wird.

In einem der Befüllung vorgeschalteten Verfahrensschritt ist es möglich, den Innenraum der Elektrolyt-Pouchzelle durch eine Absaugnadel, die vorzugsweise nach einer Entlüftung bzw. Vakuumierung auch als Dosiernadel verwendet wird, hindurch zu entlüften bzw. zu vakuumieren.

Um eine vollflächige Benetzung zellstapelseitiger Bauteile schnellstmöglich sicherzustellen, eine möglichst vollständige Befüllung der Elektrolyt-Pouchzelle mit Elektrolyt möglichst sicher zu gewährleisten und den Verbleib unerwünschter Stoffe innerhalb des Innenraums der Elektrolyt-Pouchzelle auszuschließen, ist es vorteilhaft, wenn beim Befüllen des Innenraums der Elektrolyt-Pouchzelle mit Elektrolyt zumindest zwei Dosiernadeln eingesetzt werden, von denen zumindest eine Dosiernadel als Auslassnadel für überdosiertes Elektrolyt eingesetzt wird. Erfindungsgemäß wird somit beim Befüllen des Innenraums der Elektrolyt-Pouchzelle diese quasi mittels des Elektrolyts durchspült, wodurch einerseits eine vollständige Befüllung des Innenraums mit Elektrolyt und andererseits ein vollständiges Entweichen unerwünschter Stoffe gewährleistet wird.

Um während des Befüllungsvorgangs der Elektrolyt-Pouchzelle eine vollständige Abdichtung derselben zu gewährleisten, ist es vorteilhaft, bei dem erfindungsgemäßen Verfahren eine Dosiernadel einzusetzen, deren Querschnitt zur Abdichtung gegen den von ihr durchstochenen Durchlass sich zur Nadelspitze hin leicht verjüngt, und/oder die zur Abdichtung gegen den Durchlass mit einer auf ihrer Mantelfläche angeordneten Dichtung und/oder einer an ihrem nadelspitzenfernen Endabschnitt angeordneten Dichtungsvorrichtung ausgebildet ist. Entsprechend kann ausgeschlossen werden, dass beim Einsatz der Dosiernadel unerwünschte Stoffe durch den für den Einsatz der Dosiernadel verwendeten Durchlass durchtreten.

Eine gemäß dem vorstehend geschilderten erfindungsgemäßen Verfahren hergestellte Elektrolyt-Pouchzelle kann völlig gefahrlos und mit einem geringen Aufwand im noch nicht mit Elektrolyt befüllten Zustand transportiert werden, ohne dass bei den mit dem Transportvorgang einhergehenden Umschlägen etc. die Gefahr besteht, dass irgendwelche Kontaminierungen auftreten. Darüber hinaus ist der Transportvorgang einer nicht befüllten Elektrolyt-Pouchzelle mit einem erheblich geringeren technisch-konstruktiven Aufwand einhergehend als der Transport vollständig befüllter Elektrolyt-Pouchzellen. Durch das erfindungsgemäße Verfahren ist es ohne weiteres möglich, die Elektrolyt-Pouchzelle erst unmittelbar vor ihrem Zusammenfügen mit gleichartigen Elektrolyt-Pouchzellen zu den vorstehend bereits genannten Elektrobatterieanordnungen mit Elektrolyt zu befüllen.

Eine Elektrolyt-Pouchzelle für Elektrobatterieanordnungen aus zwei miteinander durch eine Siegelnaht verschweißten Flächenabschnitten einer Folie und einem Zellstapel mit integrierten Elektroden und Separatoren sowie angebrachten Ableitern hat zumindest einen Durchlass, der zwischen den miteinander verschweißten Flächenabschnitten im Bereich der Siegelnaht eingesiegelt ist und durch den hindurch die Elektrolyt-Pouchzelle vakuumier- und befüllbar ist.

Wenn die Folie der Elektrolyt-Pouchzelle eine auf ihrer Innenseite aus Polypropylen bestehende Verbundfolie und der zumindest eine Durchlass der Elektrolyt-Pouchzelle als Polypropylendurchlass ausgebildet ist, ist aufgrund der Materialgleichheit zwischen der Innenseite der Verbundfolie und dem Polypropylendurchlass ein sicheres Anhaften des Durchlasses bzw. der Durchlässe an der Folie dauerhaft gewährleistet.

Vorzugsweise sind bei der erfindungsgemäßen Elektrolyt-Pouchzelle eine Mehrzahl, z.B. vier, Durchlässe vorgesehen.

Bei der erfindungsgemäßen Elektrolyt-Pouchzelle ist der zumindest eine Durchlass als verlorener Port ausgebildet, der nach der Befüllung der Elektrolyt-Pouchzelle schmelzbar ist.

Dieser zumindest eine Port hat vorteilhaft einen vorzugsweise abgerundeten rautenförmigen Querschnitt mit einer mittig angeordneten Blindbohrung.

Die Abmessung des Querschnitts des Ports ist vorteilhaft längs der Siegelnaht etwa doppelt so groß wie quer zur Siegelnaht.

Alternativ ist es möglich, den zumindest einen Durchlass als Kanüle mit Verschluss und integriertem Septum auszubilden, die nach der Befüllung der Elektrolyt-Pouchzelle mit einem Überstandabschnitt der Flächenabschnitte der Folie von der Elektrolyt-Pouchzelle abtrennbar ist.

Die für die Herstellung der Elektrolyt-Pouchzelle verwendete Verbundfolie ist vorteilhaft dreischichtig ausgebildet und hat eine dem Innenraum der Elektrolyt-Pouchzelle zugewandte Innenschicht aus Polypropylen, eine Mittelschicht aus Aluminium und eine Außenschicht aus Polyamid.

Zweckmäßigerweise lässt sich die erfindungsgemäße Elektrolyt-Pouchzelle als Lithium-Ionen-Pouchzelle ausgestalten.

Eine erfindungsgemäße Vorrichtung zur Herstellung von Elektrolyt-Pouchzellen für Elektrobatterieanordnungen hat einen offen- und verschließbaren Aufbau- und Versiegelungsrahmen, der ein erstes Rahmenteil, auf dem in geöffneter Stellung des Aufbau- und Versiegelungsrahmens die Elektrolyt-Pouchzelle aus einem ersten Flächenabschnitt einer Folie, einem auf dem ersten Flächenabschnitt angeordneten Zellstapel mit integrierten Elektroden und Separatoren sowie angebrachten Ableitern, und einem auf dem ersten Flächenabschnitt und dem darauf befindlichen Zellstapel angeordneten zweiten Flächenabschnitt aufbaubar ist, ein zweites Rahmenteil, das zum Schließen des Aufbau- und Versiegelungsrahmens so in Anlage an das erste Rahmenteil bringbar ist, dass die beiden Flächenabschnitte und der dazwischen befindliche Zellstapel in der vorgesehenen Anordnung aneinander fixierbar sind, und eine Schweißvorrichtung, mittels der die im Aufbau- und Versiegelungsrahmen fixiert angeordneten Flächenabschnitte der Folie mittels einer Siegelnaht miteinander verschweißbar sind, wobei, um die vorstehend geschilderte Elektrolyt-Pouchzelle nach dem ebenfalls vorstehend geschilderten Verfahren zu deren Herstellung mit einem vergleichsweise geringen Aufwand realisieren zu können, der Aufbau- und Versiegelungsrahmen der Vorrichtung zur Herstellung von Elektrolyt-Pouchzellen zumindest eine, vorzugsweise vier, Ausnehmungen aufweist, in der ein Durchlass beim Aufbau der Elektrolyt-Pouchzelle platzierbar ist, wobei der zumindest eine Durchlass beim Verschweißen der beiden Flächenabschnitte der Folie mittels der Siegelnaht fixierbar ist.

Um eine möglichst vorteilhafte Anordnung des zumindest einen Durchlasses in bzw. an der Elektrolyt-Pouchzelle zu gewährleisten, ist es vorteilhaft, wenn die zumindest eine Ausnehmung des Aufbau- und Versiegelungsrahmens im Zusammenwirken durch beide Rahmenteile des Aufbau- und Versiegelungsrahmens ausgebildet wird.

Vorteilhaft ist der Aufbau- und Versiegelungsrahmen mit Positionier- bzw. Anschlagmitteln versehen, mittels denen die beiden Flächenabschnitte der Folie ohne großen Aufwand zueinander bündig positionierbar sind.

Zur Befüllung der Elektrolyt-Pouchzellen ist die Vorrichtung zur Herstellung derselben gemäß einer vorteilhaften Ausführungsform mit einem Füllrahmen ausgerüstet, der zumindest eine, vorzugsweise vier, Ausnehmungen aufweist, von denen jede einem Port der aus dem Aufbau- und Versiegelungsrahmen entnommenen Elektrolyt-Pouchzelle zugeordnet ist, und mittels der bzw. denen die Elektrolyt-Pouchzelle zur Befüllung mit Elektrolyt im Füllrahmen positionierbar ist, da die Ports ohne großen Aufwand in diese Ausnehmungen einlegbar sind.

Um ein zuverlässiges Verschließen der verlorenen Ports zu ermöglichen, ist der Füllrahmen vorteilhaft an jeder einem Port zugeordneten Ausnehmung, und vorzugsweise sowohl vor als auch hinter dieser Ausnehmung jeweils mit einer Durchführung versehen, durch die hindurch ein Heizsegment führbar ist, mittels dem bzw. denen zumindest der innenraumseitige Abschnitt des Ports zur Verschließung desselben aufschmelzbar ist, wenn eine Dosiernadel nach Befüllung der Elektrolyt-Pouchzelle mit Elektrolyt aus dem Port entfernt wird.

Bei einer alternativen Ausführungsform der erfindungsgemäßen Vorrichtung zur Herstellung von Elektrolyt-Pouchzellen ist deren Aufbau- und Versiegelungsrahmen als kombinierter Aufbau- und Versiegelungs- sowie Füllrahmen ausgebildet, mittels dessen Schweißvorrichtung nach Befüllung der Elektrolyt-Pouchzelle mit Elektrolyt innenraumseitig der den Durchlässen zugeordneten Ausnehmungen eine zweite Siegelnaht setzbar ist.

Im Folgenden wird die Erfindung anhand von Ausführungsformen unter Bezugnahme auf die Zeichnung näher erläutert. Es zeigen:
- Figur 1: eine perspektivische Darstellung eines Polypropylenports einer Ausführungsform einer erfindungsgemäßen Elektrolyt-Pouchzelle;
- Figur 2: eine Vorderansicht des in Figur 1 gezeigten Polypropylenports;
- Figur 3: eine Prinzipdarstellung eines Aufbau- und Versiegelungsrahmens einer Ausführungsform einer erfindungsgemäßen Vorrichtung zur Herstellung von Elektrolyt-Pouchzellen;
- Figur 4: eine Prinzipdarstellung des Aufbaus einer Ausführungsform einer erfindungsgemäßen Elektrolyt-Pouchzelle;
- Figur 5: eine Prinzipdarstellung eines Füllrahmens einer Ausführungsform einer erfindungsgemäßen Vorrichtung zur Herstellung von Elektrolyt-Pouchzellen;
- Figur 6: die Einzelheit A aus Figur 5 in vergrößerter Darstellung;
- Figur 7: eine Prinzipdarstellung einer weiteren Ausführungsform eines Aufbau- und Versiegelungs- sowie Füllrahmens einer weiteren Ausführungsform der erfindungsgemäßen Vorrichtung zur Herstellung von Elektrolyt-Pouchzellen beim Aufbau- bzw. Versiegelungsschritt; und
- Figur 8: den in Figur 7 dargestellten Aufbau- und Versiegelungs- sowie Füllrahmen nach dem Füllverfahrensschritt.

Das im Folgenden anhand der Figuren erläuterte erfindungsgemäße Verfahren zur Herstellung von Elektrolyt-Pouchzellen 1 für Elektrobatterieanordnungen, die entsprechende Vorrichtung sowie die erfindungsgemäße Elektrolyt-Pouchzelle 1 werden im Folgenden anhand der Herstellung einer Lithium-Ionen-Pouchzelle 1 erläutert.

Das Gehäuse der Pouchzelle 1 besteht im dargestellten Ausführungsbeispiel aus zwei miteinander verschweißten Flächenabschnitten 2 einer als Aluminiumverbundfolie ausgebildeten Verbundfolie.

Die Aluminiumverbundfolie besteht aus drei Lagen bzw. Schichten. Die nach außen gerichtete Schicht der Aluminiumverbundfolie besteht aus Polyamid, die mittlere Schicht aus Aluminium und die zur Innenseite der Pouchzelle 1 hin gerichtete Schicht aus Polypropylen.

Bei der Herstellung der Pouchzelle 1 wird zwischen den miteinander zu verschweißenden Flächenabschnitten der Aluminiumverbundfolie ein Polypropylenport 3 eingeschweißt. Mit Hilfe dieses Polypropylenports 3 wird es ermöglicht bzw. vereinfacht, die Pouchzelle 1 unter Vakuumzustand zu befüllen, zwischenzeitlich zu verschließen, ihr Formiergas zu entnehmen und sie wiederum endgültig zu verschließen.

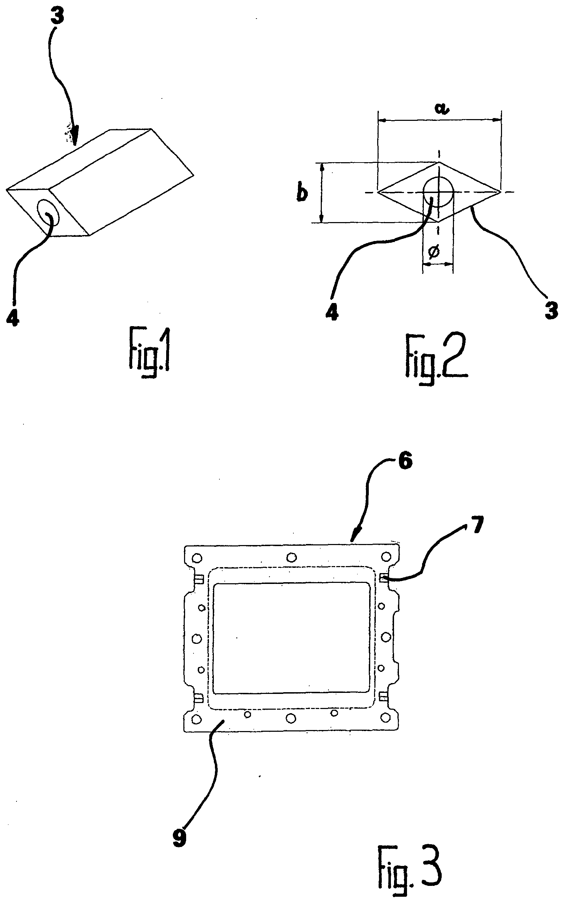

Der in den Figuren 1 und 2 anhand eines Ausführungsbeispiels gezeigte Polypropylenport 3 hat einen rautenförmigen Querschnitt und weist mittig eine Blindbohrung 4 auf. Die Abmessung a des Querschnitts des Polypropylenports 3 in Längsrichtung einer Siegelnaht der Pouchzelle 1 ist etwa doppelt so groß wie die Abmessung b quer zu dieser Siegelnaht.

Die Blindbohrung 4 kann beispielsweise einen Durchmesser von 2 mm und eine Tiefe von 3 mm aufweisen.

Mittels eines in Figur 3 gezeigten Haltedorns 5, der in der Blindbohrung 4 des Polypropylenports 3 platzierbar ist, kann der Polypropylenport 3 ausgerichtet werden. Somit wird eine exakte Positionierung des Polypropylenports 3 möglich.

Es sei darauf hingewiesen, dass bei dem im Folgenden beschriebenen Ausführungsbeispiel des erfindungsgemäßen Verfahrens, der entsprechenden Vorrichtung sowie der derart hergestellten Elektrolyt-Pouchzelle 1 letztere mit vier Polypropylenports 3 ausgerüstet ist.

Für den Zusammen- bzw. Aufbau der Pouchzelle 1 ist ein Aufbau- und Versiegelungsrahmen 6 vorgesehen, der in Figur 3 im Prinzip dargestellt ist. In dem Aufbau- und Versiegelungsrahmen 6 sind die im Folgenden noch genannten Bestandteile der Pouchzelle 1 in genauer Ausrichtung zueinander anordbar.

Der Aufbau- und Versiegelungrahmen 6 ist so gestaltet, dass dieser den Abschnitt der Flächenabschnitte der Aluminiumverbundfolie, in denen die spätere Siegelnaht ausgebildet wird, mit Vollmaterial abdeckt und die beiden Flächenabschnitte der Aluminiumverbundfolie fest aufeinander presst. Darüber hinaus sind in dem Aufbau- und Versiegelungsrahmen 6 Ausnehmungen, im dargestellten Ausführungsbeispiel vier Ausnehmungen 7 ausgebildet, die in ihrer Form an die Form der Polypropylenports 3 angepasst sind. Die Ausnehmungen 7 des Aufbau- und Versiegelungsrahmens 6 sind gemeinsam durch entsprechende Ausnehmungen in zwei zueinander beweglichen Rahmenteilen des Aufbau- und Versiegelungsrahmens ausgebildet.

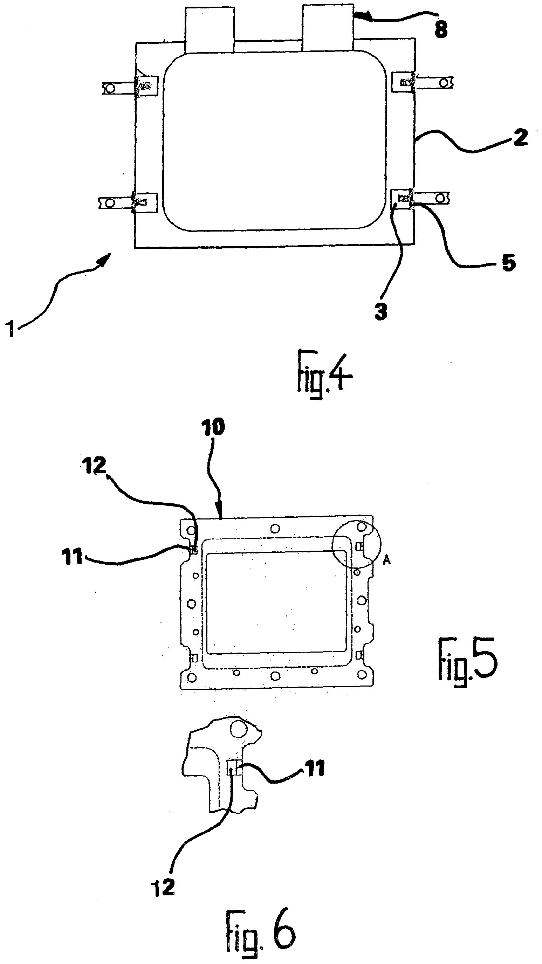

Die in Figur 4 anhand ihres Zellaufbaus prinzipiell dargestellte Pouchzelle 1 wird innerhalb des Aufbau- und Versiegelungsrahmens 6 aufgebaut. Hierzu befindet sich der Aufbauund Versiegelungsrahmen 6 in seiner geöffneten Stellung, in der das zweite Rahmenteil entfernt vom ersten Rahmenteil 9 angeordnet ist.

Auf das erste Rahmenteil 9 des Aufbau- und Versiegelungsrahmens 6 wird der erste Flächenabschnitt 2 der Aluminiumverbundfolie platziert. Ein Zellstapel 8 mit integrierten Elektroden und Separatoren sowie angebrachten Ableitern wird auf dem ersten Flächenabschnitt 2 ausgerichtet. Danach werden im dargestellten Ausführungsbeispiel vier Polypropylenports 3 mittels der in sie eingesteckten Haltedorne 5 auf dem ersten Flächenabschnitt 2 der Aluminiumverbundfolie platziert, und zwar so, dass sie in denjenigen Teilen der Ausnehmungen 7 des Aufbau- und Versiegelungsrahmens 6 angeordnet sind, die im ersten Rahmenteil 9 ausgebildet sind.

Abschließend wird der zweite Flächenabschnitt der Aluminiumverbundfolie auf den Zellstapel 8 bündig zum ersten Flächenabschnitt 2 der Aluminiumverbundfolie positioniert. Zum Verschließen des Aufbau- und Versiegelungsrahmens 6 wird nunmehr das zweite Rahmenteil desselben an das erste Rahmenteil 9 herangeführt. Bei Herstellung der Anlage zwischen den beiden Rahmenteilen wird der im Aufbau- und Versiegelungsrahmen 6 befindliche Zellaufbau der Pouchzelle 1 fixiert, wobei die einzelnen Bestandteile des Zellaufbaus dann fest zueinander ausgerichtet sind.

Der Aufbau- und Versiegelungsrahmen 6 ist zudem mit einer dauerbeheizten Schweißvorrichtung ausgestaltet. Die im Aufbau- und Versiegelungsrahmen 6 bündig fixierten Flächenabschnitte der Aluminiumverbundfolie werden nunmehr durch Wärmezufuhr mittels der im Aufbau- und Versiegelungsrahmen 6 integrierten Heizdrähte der Schweißvorrichtung miteinander verschweißt. Siegelbacken des Aufbau- und Versiegelungsrahmens 6 sind hierzu auf eine Temperatur von über 150 Grad C aufzuheizen und je nach Nahtbedingungen für eine bestimmte Siegelzeit auf der Aufheiztemperatur zu halten. Während des Siegelprozesses verbleiben die Haltedorne 5 in den jeweiligen Polypropylenports 3 und füllen entsprechend die Blindbohrungen 4 der Polypropylenports 3 aus, so dass ein Verschließen der Polypropylenports 3 durch den eintretenden Schmelzprozess des Polypropylens verhindert wird. Eine Verbindung zwischen den Polypropylenports 3 und der diese umgebenden Polypropylenschicht der Aluminiumverbundfolie ist hingegen beabsichtigt. Nach Beendigung der Verschweißung bzw. des Versiegelungsprozesses ergibt sich somit eine dicht verschweißte Pouchzelle 1 inklusive darin eingeschweißter Polypropylenports 3.

Die entsprechend hergestellte dichte Pouchzelle 1 mit darin eingesiegelten Polypropylenports 3 wird nach Öffnen des Aufbau- und Versiegelungsrahmens 6 aus diesem entnommen und an einen in den Figuren 5 und 6 prinzipiell dargestellten Füllrahmen 10 der Vorrichtung zur Herstellung von Elektrolyt-Pouchzellen 1 übergeben. Innerhalb dieses Füllrahmens 10 findet der Befüllprozess statt und die diesem nachfolgende Verschmelzung bzw. Abdichtung der Polypropylenports 3.

Auch im Füllrahmen 10 sind den Polypropylenports 3 zugeordnete Ausnehmungen 11 ausgebildet, wobei aufgrund dieser Ausnehmungen 11 im Zusammenwirken mit den Polypropylenports 3 der Pouchzelle 1 diese im Füllrahmen 10 absolut korrekt positionierbar ist und in dieser genau ausgerichteten Position fixierbar ist.

Nach der Fixierung der Pouchzelle 1 innerhalb des Füllrahmens 10 werden die Blindstopfen bzw. Haltedorne 5 aus den Blindbohrungen 4 der Polypropylenports 3 entfernt.

Die Blindbohrungen 4 werden jeweils durch eine weitere in den Figuren nicht gezeigte Blindbohrung ergänzt. Diese vom Grund der Blindbohrungen 4 verlaufenden weiteren Blindbohrungen weisen einen Durchmesser auf, dessen Größe durch den Durchmesser einer im Verlauf des folgenden Füllprozesses einzusetzenden Dosiernadel vorgegeben bzw. bestimmt ist. Die weitere Blindbohrung wird mit einer Tiefe erstellt, so dass nach Beendigung der weiteren Blindbohrung eine dünnwandige Polypropylenbarriere mit einer Dicke, die geringer oder gleich 1,5 mm ist, innerhalb des Polypropylenports 3 verbleibt.

Diese Polypropylenbarriere wird von der Dosiernadel durchstochen, wobei aufgrund dieses Durchstechvorgangs Zugang zum Innenraum der Pouchzelle 1 geschaffen wird.

Zunächst wird mit Hilfe der Dosiernadel Luft aus dem Innenraum der Pouchzelle 1 gezogen, indem Unterdruck an die Dosiernadel angelegt wird. In einem nachfolgenden Verfahrensschritt wird der Innenraum der Pouchzelle 1 mit derselben Dosiernadel mit Elektrolyt befüllt. Dieser Befüllvorgang kann durch ein hierfür geeignetes Ventil geregelt werden.

Bei dem Befüllvorgang kann einer von mehreren bei diesem Befüllvorgang eingesetzten Polypropylenports 3 bzw. die in diesem befindliche Dosiernadel dazu eingesetzt werden, überschüssiges in den Innenraum der Pouchzelle 1 eingeleiteten Elektrolyt aus dem Innenraum der Pouchzelle 1 austreten zu lassen. Hierdurch wird eine Durchspülung des Innenraums der Pouchzelle 1 erreicht, mittels der unerwünschte Stoffe aus diesem Innenraum quasi ausgespült werden, wobei als Spülflüssigkeit der Elektrolyt, der den Innenraum der Pouchzelle 1 zu Ende des Befüllvorgangs ohnehin ausfüllen soll, eingesetzt wird.

Nach der Befüllung des Innenraums der Pouchzelle 1 mit Elektrolyt ist der Polypropylenport 3 sofort zu verschließen. Hierzu besitzt der Füllrahmen 10 an den den Polypropylenports 3 zugeordneten Ausnehmungen 11 seitlich vor und hinter der Ausnehmung 11 jeweils eine rechteckige Durchführung 12. Bei der langsam ablaufenden Entfernung der Dosiernadel aus dem Polypropylenport 3 wird parallel zu diesem Vorgang ein in den Figuren nicht gezeigtes Heizsegment durch die Durchführungen 12 des Füllrahmens 10 geführt. Aufgrund der Heizwirkung der Heizsegmente wird zumindest der hintere, dem Innenraum der Pouchzelle 1 zugewandte Abschnitt des Polypropylenports 3 aufgeschmolzen, wodurch eine Verformung bzw. Verschließung des Polypropylenports 3 erreicht wird.

Grundsätzlich ist es möglich, einen für die Befüllung nicht eingesetzten Polypropylenport 3 nach Beendigung der Befüllung der Pouchzelle 1 dazu zu verwenden, im Innenraum der Pouchzelle 1 nach der Befüllung vorhandenes Formiergas aus der Pouchzelle 1 zu entnehmen.

Das vorstehend geschilderte Verfahren zur Herstellung von Elektrolyt-Pouchzellen ermöglicht eine flexible Gestaltung der Befüllung der Pouchzelle 1, da die Anzahl der in die Pouchzelle 1 einzuschweißenden Polypropylenports 3 bzw. die Anzahl der für die Befüllung des Innenraums der Pouchzelle 1 einzusetzenden Polypropylenports 3 nicht festgelegt ist.

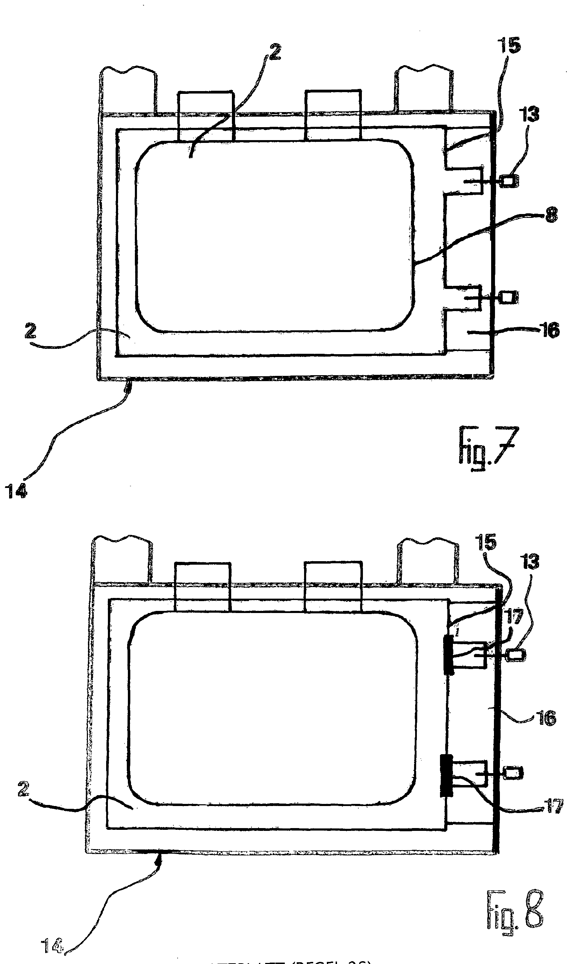

Bei einem alternativen erfindungsgemäßen Verfahren zur Herstellung von Elektrolyt-Pouchzellen 1 wird der Zugang zum Innenraum der als Lithium-Ionen-Pouchzelle 1 ausgebildeten Pouchzelle 1 durch die Anwendung von Polypropylenkanülen 13 erreicht. Zunächst erfolgt der Zusammen- bzw. Aufbau der Pouchzelle 1 innerhalb eines Aufbau- und Versiegelungs- sowie Füllrahmens 14 der Vorrichtung zur Herstellung von Elektrolyt-Pouchzellen 1. Der entsprechende Aufbau- und Versiegelungs- sowie Füllrahmen 14 ist in den Figuren 7 und 8 im Prinzip dargestellt. Beim Aufbau der Pouchzelle 1 innerhalb des Aufbau- und Versiegelung- sowie Füllrahmens 14 wird eine genaue Ausrichtung der einzelnen Bestandteile der Pouchzelle 1, nämlich des Zellstapels 8, der beiden Flächenabschnitte der Aluminiumverbundfolie und der Polypropylenkanülen 13 zueinander gewährleistet. Der Aufbau- und Versiegelung- sowie Füllrahmen 14 ist so gestaltet, dass dieser denjenigen Bereich der Flächenabschnitte der Aluminiumverbundfolie, in dem später eine erste Siegelnaht 15 verläuft, mit Vollmaterial abdeckt und die beiden Flächenabschnitte der Aluminiumverbundfolie fest aufeinander presst.

Der Zellaufbau der Pouchzelle 1 wird bei geöffneter Position des Aufbau- und Versiegelungs- sowie Füllrahmens 14 erstellt. Hierzu wird zunächst der erste Flächenabschnitt 2 auf dem ersten Rahmenteil positioniert. Danach folgt der Zellstapel 8. Nachfolgend werden die Polypropylenkanülen 13 entsprechend im Aufbau- und Versiegelung- sowie Füllrahmen 14 vorgesehenen Ausnehmungen 16 positioniert, z.B. an einem vertikalen Rand der Pouchzelle 1. Abschließend wird der zweite Flächenabschnitt der Aluminiumverbundfolie bündig zum ersten Flächenabschnitt 2 auf dem bis dahin erstellten Zellaufbau platziert.

Die beiden Flächenabschnitte der Aluminiumverbundfolie sind zunächst mit einer bezogen auf die Abmessungen der Pouchzelle 1 größeren Breite gewählt. Der so entstehende Überstandabschnitt 16 der Flächenabschnitte wird dazu eingesetzt, um ein Pouchpack zu erhalten, welches zum Großteil kontaminationsfreie Siegelnähte aufweist.

Innerhalb des Aufbau- und Versiegelungs- sowie Füllrahmens 14 werden mit Hilfe einer darin vorgesehenen Schweißvorrichtung bereits fast alle Hauptabmaße der Pouchzelle 1 gesiegelt, wie dies in Figur 7 dargestellt ist.

Bei diesem Versiegelungs- bzw. Schweißvorgang, bei dem die erste Siegelnaht 15 erstellt wird, werden die Polypropylenkanülen 13 eingesiegelt. Hierbei werden die durch den Aufbauund Versiegelung- sowie Füllrahmen 14 bündig fixierten Flächenabschnitte der Aluminiumverbundfolie durch Wärmezufuhr von der im Aufbau- und Versiegelungs- sowie Füllrahmen 14 integrierte Heizdrähte aufweisenden Schweißvorrichtung miteinander verschweißt. Hierbei sind Siegelbacken des Aufbau- und Versiegelungs- sowie Füllrahmens 14 auf eine Temperatur oberhalb von 150 Grad C zu heizen und je nach Nahtbedingungen für eine bestimmte Siegelzeit auf dieser Aufheiztemperatur zu halten.

Aufgrund der Versiegelung der Polypropylenkanülen 13 kann der Innenraum der Pouchzelle 1 evakuiert und danach befüllt werden.

Die Polypropylenkanülen 13 enthalten Verschlüsse, in denen ein Septum integriert ist. Hierdurch kann der Zugang zum Innenraum der Pouchzelle 1 mehrfach geöffnet und wieder geschlossen werden.

Das Befüllen bzw. Evakuieren des Innenraums der Pouchzelle 1 wird erreicht, indem das Septum des Verschlusses bzw. Deckels durchstochen wird und somit der Zugang zum Innenraum der Pouchzelle 1 geschaffen wird. Das Befüllverfahren kann somit flexibel gestaltet werden. Sobald die Befüllung und ggf. der Verfahrensschritt des Vorformierens beendet ist, können die Pouchzellen 1 ihren eigentlichen Abmaßen angepaßt werden.

Hierzu wird die nach wie vor innerhalb des Aufbau- und Versiegelung- sowie Füllrahmens 14 befindliche Pouchzelle 1 mit einer weiteren Siegelnaht 17 versehen, wie dies in Figur 8 dargestellt ist. Durch diese weitere Siegelnaht 17 wird die Pouchzelle in ihren eigentlichen Abmaßen begrenzt und dicht verschlossen. Der Überstandabschnitt 16 inklusive der darin versiegelten Polypropylenkanülen 13 kann nun abgetrennt und entsorgt werden. Das Abtrennen erfolgt nachdem die Pouchzelle 1 aus dem Aufbau- und Versiegelungs- sowie Füllrahmen entnommen worden ist.

## Patentansprüche

1. Verfahren zur Herstellung von Elektrolyt-Pouchzellen (1) für Elektrobatterieanordnungen, bei dem ein erster Flächenabschnitt (2) einer Folie platziert wird, ein Zellstapel (8) mit integrierten Elektroden und Separatoren sowie angebrachten Ableitern auf den platzierten ersten Flächenabschnitt (2) angeordnet und ausgerichtet wird, ein zweiter Flächenabschnitt der Folie auf dem ersten Flächenabschnitt (2) derselben und dem Zellstapel (8) positioniert wird, und die beiden Flächenabschnitte der Folie an ihren den Zellstapel (8) umgebenden und nicht miteinander verbundenen Bereichen unter Ausbildung einer Siegelnaht (15) miteinander verschweißt werden, wobei vor dem Verschweißen der beiden Flächenabschnitte der Folie im Bereich der Siegelnaht (15) zumindest ein Durchlass (3) platziert wird, und der zumindest eine Durchlass (3) beim Schweißen der Siegelnaht (15) in dieser eingesiegelt wird, **dadurch gekennzeichnet, dass** als Durchlässe verlorene Ports (3) vorgesehen werden, und in eine Blindbohrung (4) jedes Ports (3) ein Haltedorn (5) eingesteckt wird, mittels dem der Port (3) positioniert und seine Blindbohrung (4) während des Verschweißens offengehalten wird.

2. Verfahren nach Anspruch 1, bei dem als Folie eine auf ihrer Innenseite aus Polypropylen bestehende Verbundfolie und als Durchlass ein Polypropylendurchlass verwendet werden.

3. Verfahren nach Anspruch 1 oder 2, bei dem als Flächenabschnitt der Folie zwei voneinander getrennte Folienabschnitte verwendet werden.

4. Verfahren nach einem der Ansprüche 1 bis 3, bei dem die beiden Flächenabschnitte der Folie vor dem Verschweißen bündig zueinander angeordnet werden.

5. Verfahren nach einem der Ansprüche 1 bis 4, bei dem eine Mehrzahl, vorzugsweise vier, Durchlässe (3; 13) platziert und eingesiegelt werden.

6. Verfahren nach einem der Ansprüche 1 bis 5, bei dem jeder Haltedorn (5) aus dem ihm zugeordneten Port (3) entfernt wird, eine Dosiernadel in die Blindbohrung (4) des Ports (3) eingeführt wird, und die Dosiernadel durch den Port (3) zum Innenraum der Elektrolyt-Pouchzelle (1) durchgestochen wird.

7. Verfahren nach Anspruch 6, bei dem vor Einführung der Dosiernadel in die Blindbohrung (4) des Ports (3) die Blindbohrung (4) etwa mittig durch eine weitere Blindbohrung vertieft wird, und zwischen dem Grund der weiteren Blindbohrung und dem Innenraum der Elektrolyt-Pouchzelle (1) im Port (3) eine Barriere, z.B. mit einer Dicke ≤ 1,5 mm, belassen wird.

8. Verfahren nach Anspruch 6 oder 7, bei dem der Innenraum der Elektrolyt-Pouchzelle (1) durch die Dosiernadel hindurch mit Elektrolyt befüllt wird, die Dosiernadel aus dem Port (3) herausgezogen wird, und der Port (3) beim Herausziehen der Dosiernadel aufgeschmolzen wird.

9. Verfahren nach Anspruch 8, bei dem der mit Elektrolyt befüllte Innenraum der Elektrolyt-Pouchzelle (1) durch einen für die Befüllung nicht verwendeten Port (3) entgast wird und der Port (3) nach der Entgasung beim Herausziehen einer Entgasungsnadel aufgeschmolzen wird.

10. Verfahren nach einem der Ansprüche 1 bis 9, bei dem der Innenraum der Elektrolyt-Pouchzelle (1) durch eine Absaugnadel, die vorzugsweise nach einer Entlüftung bzw. Vakuumierung auch als Dosiernadel verwendet wird, hindurch entlüftet bzw. vakuumiert wird.

11. Verfahren nach Anspruch 8 oder 9, bei dem beim Befüllen des Innenraums der Elektrolyt-Pouchzelle (1) mit Elektrolyt zumindest zwei Dosiernadeln eingesetzt werden, von denen zumindest eine Dosiernadel als Auslassnadel für überdosiertes Elektrolyt eingesetzt wird.

12. Verfahren nach einem der Ansprüche 6 bis 9 und 11, bei dem eine Dosiernadel eingesetzt wird, deren Querschnitt zur Abdichtung gegen den von ihr durchstochenen Durchlass sich zur Nadelspitze hin leicht verjüngt und/oder die zur Abdichtung gegen den Durchlass mit einer auf ihrer Mantelfläche angeordneten Dichtung und/oder einer an ihrem nadelspitzenfernen Endabschnitt angeordneten Dichtungsvorrichtung ausgebildet ist.

13. Elektrolyt-Pouchzelle für Elektrobatterieanordnungen, vorzugsweise hergestellt gemäß einem Verfahren nach den Ansprüchen 1 bis 12, aus zwei miteinander durch eine Siegelnaht (15) verschweißten Flächenabschnitten einer Folie und einem Zellstapel (8) mit integrierten Elektroden und Separatoren sowie angebrachten Ableitern, wobei zwischen den miteinander verschweißten Flächenabschnitten im Bereich der Siegelnaht (15) zumindest ein Durchlass (3) eingesiegelt ist, durch den hindurch die Elektrolyt-Pouchzelle (1) vakuumier- und befüllbar ist, wobei der zumindest eine Durchlass als verlorener Port (3) ausgebildet ist, der nach der Befüllung der Elektrolyt-Pouchzelle (1) schmelzbar ist, und wobei der zumindest eine Port (3) einen vorzugsweise abgerundeten rautenförmigen Querschnitt aufweist, **dadurch gekennzeichnet, dass** der zumindest eine Port (3) mit einer mittig angedeuteten Blindbohrung (4) ausgebildet ist.

14. Elektrolyt-Pouchzelle nach Anspruch 13, deren Folie eine auf ihrer Innenseite aus Polypropylen bestehende Verbundfolie und deren Durchlass als Polypropylendurchlass (3) ausgebildet ist.

15. Elektrolyt-Pouchzelle nach Anspruch 13 oder 14, die eine Mehrzahl, vorzugsweise vier, Durchlässe (3) aufweist.

16. Elektrolyt-Pouchzelle nach einem der Ansprüche 13 bis 15, bei der die Abmessung des Querschnitts des Ports (3) längs der Siegelnaht etwa doppelt so groß ist wie quer zur Siegelnaht.

17. Elektrolyt-Pouchzelle nach einem der Ansprüche 14 bis 16, deren Verbundfolie dreischichtig ausgebildet ist und eine Innenschicht aus Polypropylen, eine Mittelschicht aus Aluminium und eine Außenschicht aus Polyamid aufweist.

18. Elektrolyt-Pouchzelle nach einem der Ansprüche 13 bis 17, die als Lithium-Ionen-Pouchzelle ausgebildet ist.

19. Vorrichtung zur Herstellung von Elektrolyt-Pouchzellen (1) für Elektrobatterieanordnungen, mit einem offen- und verschließbaren Aufbau- und Versiegelungsrahmen (6), der ein erstes Rahmenteil (9), auf dem in geöffneter Stellung des Aufbau- und Versiegelungsrahmens (6) die Elektrolyt-Pouchzelle (1) aus einem ersten Flächenabschnitt (2) einer Folie, einem auf dem ersten Flächenabschnitt (2) angeordneten Zellstapel (8) mit integrierten Elektroden und Separatoren sowie angebrachten Ableitern, und einem auf dem ersten Flächenabschnitt (2) und dem darauf befindlichen Zellstapel (8) angeordneten zweiten Flächenabschnitt aufbaubar ist, ein zweites Rahmenteil, das zum Schließen des Aufbau- und Versiegelungsrahmens (6) so in Anlage an das erste Rahmenteil (9) bringbar ist, dass die beiden Flächenabschnitte und der dazwischen befindliche Zellstapel (8) in der vorgesehenen Anordnung aneinander fixierbar sind, und eine Schweißvorrichtung aufweist, mittels der die im Aufbau- und Versiegelungsrahmen (6) fixiert angeordneten Flächenabschnitte der Folie mittels einer Siegelnaht miteinander verschweißbar sind, **dadurch gekennzeichnet, dass** der Aufbau- und Versiegelungsrahmen (6) zumindest eine, vorzugsweise vier, Ausnehmungen (7) aufweist, in der ein Durchlass (3) beim Aufbau der Elektrolyt-Pouchzelle (1) platzierbar und beim Verschweißen der beiden Flächenabschnitte der Folie mittels der Siegelnaht fixierbar ist.

20. Vorrichtung nach Anspruch 19, bei der die zumindest eine Ausnehmung (7) im Zusammenwirken durch beide Rahmenteile des Aufbau- und Versiegelungsrahmens (6) ausgebildet ist.

21. Vorrichtung nach Anspruch 19 oder 20, mit Positionier- bzw. Anschlagmitteln, mittels denen die beiden Flächenabschnitte der Folie zueinander bündig positionierbar sind.

22. Vorrichtung nach einem der Ansprüche 19 bis 21, mit einem Füllrahmen (10), zu zumindest eine, vorzugsweise vier, Ausnehmungen (11) aufweist, von denen jede einen Port (3) der aus dem Aufbau- und Versiegelungsrahmen (6) entnommenen Elektrolyt-Pouchzelle (1) zugeordnet ist, und mittels der bzw. denen die Elektrolyt-Pouchzelle (1) zur Befüllung mit Elektrolyt im Füllrahmen (10) positionierbar ist.

23. Vorrichtung nach Anspruch 22, deren Füllrahmen (10) an jeder einem Port (3) zugeordneten Ausnehmung (11) zumindest eine, vorzugsweise vor und hinter der Ausnehmung (11) jeweils eine Durchführung (12) aufweist, durch die hindurch ein Heizsegment führbar ist, mittels dem zumindest der innenraumseitige Abschnitt des Ports (3) zur Verschließung desselben aufschmelzbar ist, wenn die Dosiernadel nach Befüllung der Elektrolyt-Pouchzelle mit Elektrolyt aus dem Port (3) entfernt wird.

## Claims

1. A method for producing electrolyte pouch cells (1) for electric battery assemblies, in which a first flat section (2) of a film is placed, a cell stack (8) with integrated electrodes and separators and attached arresters is arranged and aligned on the placed first flat section (2), a second flat section of the film is positioned on the first flat section (2) of the same and the cell stack (8), and the two flat sections of the film are welded together at their regions surrounding the cell stack (8) and not connected to one another to form a sealed seam (15), wherein before the welding of the two flat sections of the film in the region of the sealed seam (15), at least one feedthrough (3) is placed, and the at least one feedthrough (3) is sealed in the sealing seam (15) during the welding thereof, **characterized in that** lost ports (3) are provided as feedthroughs and a retaining mandrel (5) is inserted into a blind hole (4) in each port (3), by means of which the port (3) is positioned and its blind bore (4) is kept open during welding.

2. The method according to Claim 1, in which the film is a composite film consisting of polypropylene on its inner side and a polypropylene feedthrough is used as the feedthrough.

3. The method according to Claim 1 or 2, in which two film sections that are separate from one another are used as the flat section of the film.

4. The method according to one of Claims 1 to 3, in which the two flat sections of the film are arranged flush with one another before the welding.

5. The method according to one of Claims 1 to 4, in which a plurality of, preferably four, feedthroughs (3; 13) are placed and sealed in.

6. The method according to one of Claims 1 to 5, in which each retaining mandrel (5) is removed from the port (3) assigned to it, a metering needle is introduced into the blind bore (4) of the port (3) and the metering needle is pierced through the port (3) to the interior of the electrolyte pouch cell (1).

7. The method according to Claim 6, in which before the metering needle is introduced into the blind bore (4) of the port (3), the blind hole (4) is recessed approximately centrally through another blind hole and a barrier, e.g. having a thickness ≤ 1.5 mm, is left in the port (3) between the base of the further blind hole and the interior of the electrolyte pouch cell (1) .

8. The method according to Claim 6 or 7, in which the interior of the electrolyte pouch cell (1) is filled with electrolyte through the metering needle, the metering needle is withdrawn from the port (3) and the port (3) is fused during withdrawal of the metering needle.

9. The method according to Claim 8, in which the interior of the electrolyte pouch cell (1) filled with electrolyte is degassed through a port (3) not used for filling and the port (3) is fused after the degassing during withdrawal of a degassing needle.

10. The method according to one of Claims 1 to 9, in which the interior of the electrolyte pouch cell (1) is vented or a vacuum is created by a suction needle which is preferably also used as a metering needle following a venting or creation of a vacuum.

11. The method according to Claim 8 or 9, in which at least two metering needles are used during the filling of the interior of the electrolyte pouch cell (1) with electrolyte, of which at least one metering needle is used as the outlet needle for over-metered electrolyte.

12. The method according to one of Claims 6 to 9 and 11, in which a metering needle is used, the cross-section of which is slightly tapered towards the needle tip for sealing against the feedthrough that it has pierced and/or that is configured for sealing against the feedthrough with a seal arranged on its lateral surface and/or a sealing device arranged on its end section remote from the needle tip.

13. An electrolyte pouch cell for electric battery assemblies, preferably produced in accordance with a method according to Claims 1 to 12, made up of two flat sections of a film welded together by a sealed seam (15) and a cell stack (8) with integrated electrodes and separators, and also attached arresters, wherein between the flat sections welded to one another in the region of the sealed seam (15), at least one feedthrough (3) is sealed in, through which the electrolyte pouch cell (1) can be filled and a vacuum created, wherein the at least one feedthrough is designed as a lost port (3) which can be fused after the electrolyte pouch cell (1) has been filled, and wherein the at least one port (3) has a preferably rounded, diamond-shaped cross section, **characterized in that** the at least one port (3) is designed with a centrally indicated blind hole (4).

14. The electrolyte pouch cell according to Claim 13, whereof the film is formed on its inner side from composite film consisting of polypropylene and whereof the feedthrough is designed as a polypropylene feedthrough (3).

15. The electrolyte pouch cell according to Claim 13 or 14, which exhibits a plurality of, preferably four, feedthroughs (3).

16. The electrolyte pouch cell according to one of Claims 13 to 15, wherein the dimension of the cross-section of the port (3) is roughly twice as great along the sealed seam as transverse to the sealed seam.

17. The electrolyte pouch cell according to one of Claims 14 to 16, whereof the composite film is configured in three layers and has an inner layer made of propylene, a middle layer made of aluminium and an outer layer made of polyamide.

18. The electrolyte pouch cell according to one of Claims 13 to 17, which is designed as a lithium ion pouch cell.

19. A device for producing electrolyte pouch cells (1) for electric battery assemblies, having an openable and closable structural and sealing frame (6) which comprises a first frame part (9) on which, in the open position of the structural and sealing frame (6), the electrolyte pouch cell (1) can be constructed from a first flat section (2) of a film, a cell stack (8) with integrated electrodes and separators, as well as attached arresters, arranged on the first flat section (2), and a second flat section arranged on the first flat section (2) and the cell stack (8) located thereon, can be constructed, a second frame part that can be brought to abut against the first frame part (9) for closing the structural and sealing frame (6), so that the two flat sections and the cell stack (8) located therebetween can be fixed onto one another in the assembly provided, and a welding device by means of which the flat sections of the film arranged fixedly in the structural and sealing frame can be welded together by means of a sealed seam, **characterized in that** the structural and sealing frame (6) has at least one, preferably four, recesses (7), in which a feedthrough (3) can be placed during construction of the electrolyte pouch cell (1) and can be fixed by means of the sealed seam during the welding of the two flat sections of the film.

20. The device according to Claim 19, in which the at least one recess (7) is formed by two frame parts of the structural and sealing frame (6) during cooperation.

21. The device according to Claim 19 or 20, having positioning or stop means, by means of which the two flat sections of the film can be positioned flush with respect to one another.

22. The device according to one of Claims 19 to 21, having a filling frame (10) that has at least one, preferably four, recesses (11), each of which is assigned a port (3) of the electrolyte pouch cell (1) removed from the structural and sealing frame (6), and by means of which the electrolyte pouch cell (1) can be positioned in the filling frame (10) for filling.

23. The device according to Claim 22, whereof the filling frame (10) has at each recess (11) assigned to a port (3) at least one feedthrough (12), preferably before and after the recess (11) in each case, through which feedthrough a heating segment can be guided, by means of which at least the section of the port (3) on the interior side can be fused in order to close the same, when the metering needle is removed from the port (3) once the filling of the electrolyte pouch cell with electrolyte has taken place.

## Revendications

1. Procédé de fabrication de poches d'électrolyte (1) pour des ensembles de batteries électriques, dans lequel une première section de surface (2) d'un film est placée, un empilement de cellules (8) avec des électrodes et des séparateurs intégrés ainsi que des conducteurs fixés est agencé et aligné sur la première section de surface (2), une deuxième section de surface du film est positionnée sur la première section de surface (2) de celui-ci et l'empilement de cellules (8), et les deux sections de surface du film sur leurs zones entourant leur empilement de cellules (8) et qui ne sont pas reliées les unes aux autres sont soudées les unes aux autres pour former un cordon de soudure (15), dans lequel au moins un passage (15) est placé avant que les deux sections de surface du film ne soient soudées ensemble au niveau du cordon de soudure (3) et le au moins un passage (3) lors de la soudure du cordon de soudure (15) est ménagé dans celui-ci, **caractérisé en ce que** des orifices (3) perdus sont prévus comme passages, et dans un alésage borgne (4) de chaque orifice (3) un mandrin de retenue (5) est inséré, au moyen duquel l'orifice (3) est positionné et son alésage borgne (4) est maintenu ouvert lors de la soudure.

2. Procédé selon la revendication 1, dans lequel un film composite constitué de polypropylène sur sa face intérieure est utilisé comme film et un passage en polypropylène est utilisé comme passage.

3. Procédé selon la revendication 1 ou 2, dans lequel deux sections de film séparées sont utilisées comme section de surface du film.

4. Procédé selon une des revendications 1 à 3, dans lequel les deux sections de surface de film sont disposées à fleur l'une de l'autre avant le soudage.

5. Procédé selon une quelconque des revendications 1 à 4, dans lequel une pluralité, de préférence quatre, passages (3; 13) sont placés et scellés.

6. Procédé selon une quelconque des revendications 1 à 5, dans lequel le mandrin de maintien (5) est retiré de l'orifice (3) qui lui est affecté, une aiguille de dosage est insérée dans l'alésage borgne (4) de l'orifice (3) et l'aiguille de dosage perce à travers l'orifice (3) vers l'intérieur de la poche d'électrolyte (1).

7. Procédé selon la revendication 6, dans lequel avant d'insérer l'aiguille de dosage dans l'alésage borgne (4) de l'orifice (3), l'alésage borgne (4) est approfondi approximativement au milieu par un autre alésage borgne, et entre le fond de l'alésage borgne supplémentaire et l'intérieur de la poche d'électrolyte (1) dans l'orifice (3) une barrière, par exemple avec une épaisseur de 1,5 mm, est ménagée.

8. Procédé selon la revendication 6 ou 7, dans lequel l'intérieur de la poche d'électrolyte (1) est rempli d'électrolyte à travers l'aiguille de dosage, l'aiguille de dosage est retirée de l'orifice (3) et l'orifice (3) est fondu lors de l'extraction de l'aiguille de dosage.

9. Procédé selon la revendication 8, dans lequel l'intérieur de la poche d'électrolyte (1) rempli d'électrolyte est dégazé par un orifice (3) non utilisé pour le remplissage et l'orifice (3) est fondu après le dégazage lors de l'extraction d'une aiguille de dégazage.

10. Procédé selon une quelconque des revendications 1 à 9, dans lequel l'intérieur de la poche d'électrolyte (1) est aéré ou mis sous vide par une aiguille d'aspiration, qui est de préférence également utilisée comme aiguille de dosage après aération ou mise sous vide.

11. Procédé selon la revendication 8 ou 9, dans lequel lors du remplissage de l'intérieur de la poche d'électrolyte (1) avec de l'électrolyte au moins deux aiguilles de dosage sont utilisées, dont au moins une aiguille de dosage est utilisée comme aiguille de sortie pour l'électrolyte surdosé.

12. Procédé selon une quelconque des revendications 6 à 9 et 11, dans lequel une aiguille de dosage est utilisée, dont la section transversale se rétrécit légèrement vers la pointe de l'aiguille pour assurer l'étanchéité contre le passage percé par celle-ci et/ou le joint d'étanchéité disposé sur sa surface de gaine pour assurer l'étanchéité contre le passage et/ ou un dispositif d'étanchéité disposé à sa partie d'extrémité éloignée de la pointe d'aiguille.

13. Poche d'électrolyte pour ensembles de batteries électriques, de préférence fabriquée selon un procédé selon les revendications 1 à 12, à partir de deux sections de surface (2) d'un film soudées l'une à l'autre par un cordon de soudure (15) et un empilement de cellules (8) avec des électrodes et des séparateurs intégrés ainsi que des conducteurs fixés, dans laquelle entre les sections de surface soudées les unes aux autres au niveau du cordon de soudure (15) au moins un passage est ménagé, à travers lequel la poche d'électrolyte (1) peut être aérée et mise sous vide, dans laquelle le au moins un passage est configuré comme un orifice perdu (3), qui peut être fondu après le remplissage de la poche d'électrolyte (1) et dans laquelle le au moins un orifice (3) présente une section transversale en forme de losange de préférence arrondi, **caractérisée en ce que** le au moins un orifice (3) est configuré avec un alésage borgne (4) centré.

14. Poche d'électrolyte selon la revendication 13, dont le film est un film composite constitué de polypropylène à l'intérieur et dont l'ouverture est conçue comme une ouverture en polypropylène (3).

15. Poche d'électrolyte selon la revendication 13 ou 14, qui présente une pluralité, de préférence quatre, de passages (3) .

16. Poche d'électrolyte selon une des revendications 13 à 15, dans laquelle la dimension de la section transversale de l'orifice (3) le long du cordon de soudure est environ le double de celle transversalement au cordon de soudure.

17. Poche d'électrolyte selon une des revendications 14 à 16, dont le film composite est réalisé en trois couches et présente une couche intérieure en polypropylène, une couche médiane en aluminium et une couche extérieure en polyamide.

18. Poche d'électrolyte selon une des revendications 13 à 17, qui est conçue comme une poche lithium-ion.

19. Dispositif pour la fabrication de poches d'électrolytes (1) pour des ensembles de batteries électriques, comportant un cadre de montage et d'étanchéité (6) pouvant être ouvert et fermé, qui présente une première partie de cadre (9) sur laquelle, dans la position ouverte du cadre de montage et d'étanchéité (6) la poche d'électrolyte (1) peut être constituée d'une première section de surface (2) d'un film, d'un empilement de cellules (8) agencé sur la première section de surface (2) avec des électrodes et des séparateurs intégrés ainsi que des conducteurs attachés, et d'une deuxième section de surface disposée sur la première section de surface (2) et l'empilement de cellules (8) agencé sur celle-ci, une deuxième partie de cadre qui peut être amenée en contact avec la première partie de cadre (9) afin de fermer le cadre de montage et d'étanchéité (6), que les deux sections de surface et l'empilement de cellules (8) situées entre elles peuvent être fixées l'une à l'autre dans l'agencement prévu, et présente un dispositif de soudage, au moyen duquel les sections de surface du film peuvent être soudées ensemble au moyen d'un cordon de soudure, **caractérisé en ce que** le cadre de montage et d'étanchéité (6) présente au moins un évidement, de préférence quatre évidements (7), dans lequel un passage (3) peut être placé lors de la fabrication de la poche d'électrolyte (1) et peut être fixé au moyen du cordon de soudure lorsque les deux sections de surface du film sont soudées.

20. Dispositif selon la revendication 19, dans lequel le au moins un évidement (7) est formé en coopération avec les deux parties de cadre du cadre de montage et d'étanchéité (6).

21. Dispositif selon la revendication 19 ou 20, comportant des moyens de positionnement ou d'arrêt, au moyen desquels les deux sections de surface du film peuvent être positionnées à fleur l'une de l'autre.

22. Dispositif selon une des revendications 19 à 21, comportant un cadre de remplissage (10) qui présente un, de préférence quatre, évidements (11), auxquels est respectivement affecté un orifice (3) de la poche d'électrolyte (1) prélevée du cadre de montage et d'étanchéité (6), et au moyen duquel ou desquels la poche d'électrolyte (1) peut être positionnée dans le cadre de remplissage (10) pour le remplissage d'électrolyte.

23. Dispositif selon la revendication 22, dont le cadre de remplissage (10) à chaque évidement (11) associé à un orifice respectif (3) présente au moins un passage (12), de préférence devant et derrière l'évidement (11), à travers lequel un segment chauffant peut être guidé, au moyen duquel au moins la section intérieure de l'orifice (3) peut être fondue pour obturer ce dernier lorsque l'aiguille de dosage est retirée de l'orifice (3) après que la poche d'électrolyte a été remplie d'électrolyte.
